# EUROPEAN PATENT APPLICATION

(11) **EP 4 560 994 A1**
(43) Date of publication of application: **28.05.2025**
(21) Application number: 22951517.6
(22) Date of filing: 20.07.2022
(51) Int. Cl.: H04L 27/00

(54) **PDSCH TRANSMISSION METHOD, AND APPARATUS**

(71) Applicant: Beijing Xiaomi Mobile Software Co., Ltd., Beijing 100085 (CN)
(72) Inventor: MU, Qin, Beijing 100085 (CN)
(74) Representative: Stöckeler, Ferdinand
(86) International application number: PCT/CN2022/106893
(87) International publication number: WO 2024/016240

(57) **Abstract**

Provided in the present disclosure are a PDSCH transmission method, an apparatus, a device and a storage medium, belonging to the technical field of communications. The method comprises: in response to a transmission opportunity of a broadcast PDSCH, determining whether to transmit a unicast PDSCH to a terminal at the transmission opportunity and/or determining a resource occupied by the unicast PDSCH allocated to the terminal. A processing method is provided in the present disclosure for a "PDSCH transmission" situation so as to provide a transmission mechanism for unicast PDSCHs and broadcast PDSCHs, which can transmit broadcast PDSCHs and unicast PDSCHs, thereby improving the convenience of transmission of a plurality of PDSCHs.

## Description

### TECHNICAL FIELD

The disclosure relates to the field of communication technology, more particular to a physical downlink shared channel (PDSCH) transmission method, an apparatus, a device and a storage medium.

### BACKGROUND

In a communication system, in order to support Internet of Things (IoT) services, long term evolution (LTE) fourth generation (4G) mobile communication technologies propose machine-type communication (MTC) and Narrow Band IoT (NB-IoT). With the continuous development of IoT services, requirements for rate and delay are increasing. Reduced capability user equipments (UEs) are used to cover the requirements of mid-range IoT devices. However, in the related art, the transmission of data channel (physical downlink shared channel, PDSCH) is limited, and the mechanism of transmission of a plurality of PDSCHs is not involved, which lead a poor transmission convenient for unicast PDSCH and broadcast PDSCH.

### SUMMARY

The disclosure provides a physical downlink shared channel (PDSCH) transmission method, an apparatus, a device and a storage medium, to provide a transmission mechanism of a unicast PDSCH and a broadcast PDSCH, which may improve a transmission convenience of a plurality of PDSCHs.

According to a first aspect of embodiments of the disclosure, a PDSCH transmission method is provided. The method is performed by a network-side device, and includes:
in response to a transmission occasion of a broadcast PDSCH, determining whether to send a unicast PDSCH to a terminal on the transmission occasion and/or determining resources allocated to and occupied by a unicast PDSCH of a terminal.

Optionally, in an embodiment of the disclosure, determining whether to send the unicast PDSCH to the terminal on the transmission occasion and/or determining the resources allocated to and occupied by the unicast PDSCH of the terminal, includes:
in response to frequency resources occupied by the broadcast PDSCH and the unicast PDSCH not exceeding a processing capacity of the terminal, sending the unicast PDSCH;
   or,
in response to sending the broadcast PDSCH and the unicast PDSCH simultaneously, determining that resources within a processing capacity of the terminal are allocated to the broadcast PDSCH and the unicast PDSCH of the terminal.

Optionally, in an embodiment of the disclosure, determining whether to send the unicast PDSCH to the terminal on the transmission occasion and/or determining the resources allocated to and occupied by the unicast PDSCH of the terminal, includes:
in response to frequency resources occupied by the broadcast PDSCH and the unicast PDSCH exceeding a processing capacity of the terminal but not exceeding a first preset threshold, sending the unicast PDSCH;
   or,
in response to sending the broadcast PDSCH and the unicast PDSCH simultaneously, determining that resources not exceeding a first preset threshold are allocated to and occupied by the broadcast PDSCH and the unicast PDSCH, wherein the first preset threshold is no less than the processing capacity of the terminal.

Optionally, in an embodiment of the disclosure, determining whether to send the unicast PDSCH to the terminal on the transmission occasion and/or determining the resources allocated to and occupied by the unicast PDSCH of the terminal, includes:
in response to frequency resources occupied by the broadcast PDSCH and the unicast PDSCH exceeding a first preset threshold, withholding from sending the unicast PDSCH.

Optionally, in an embodiment of the disclosure, the frequency resources occupied by the broadcast PDSCH and the unicast PDSCH include at least one of:
a number of physical resource blocks (PRBs) occupied by the broadcast PDSCH and the unicast PDSCH; or
a difference value between a lowest frequency point and a highest frequency point in the broadcast PDSCH and the unicast PDSCH.

Optionally, in an embodiment of the disclosure, determining whether to send the unicast PDSCH to the terminal on the transmission occasion and/or determining the resources allocated to and occupied by the unicast PDSCH of the terminal, includes:
according to a preset priority, determining whether to send the unicast PDSCH to the terminal on the transmission occasion and/or determining the resources allocated to and occupied by the unicast PDSCH of the terminal.

Optionally, in an embodiment of the disclosure, according to the preset priority, determining whether to send the unicast PDSCH to the terminal on the transmission occasion and/or determining the resources allocated to and occupied by the unicast PDSCH of the terminal, includes:
in response to a priority of the unicast PDSCH being higher than a priority of the broadcast PDSCH, sending the unicast PDSCH to the terminal and/or determining that the resources not exceeding a second preset threshold are allocated to and occupied by the unicast PDSCH of the terminal, wherein the second preset threshold is no less than a processing capacity of the terminal.

Optionally, in an embodiment of the disclosure, according to the preset priority, determining whether to send the unicast PDSCH to the terminal on the transmission occasion and/or determining the resources allocated to and occupied by the unicast PDSCH of the terminal, includes:
in response to a priority of the unicast PDSCH being lower than a priority of the broadcast PDSCH, withholding from sending the unicast PDSCH to the terminal;
   or,
in response to a priority of the unicast PDSCH being lower than a priority of the broadcast PDSCH, determining that resources not exceeding a third preset threshold are allocated to and occupied by the broadcast PDSCH and the unicast PDSCH of the terminal, wherein the third preset threshold is no less than a processing capacity of the terminal.

According to a second aspect of embodiments of the disclosure, a PDSCH transmission method is provided. The method is performed by a terminal, and includes:
in response to a receiving occasion of a broadcast PDSCH, determining a receiving behavior of the broadcast PDSCH and/or a unicast PDSCH.

Optionally, in an embodiment of the disclosure, determining the receiving behavior of the broadcast PDSCH and/or the unicast PDSCH, includes:
in response to frequency resources occupied by the broadcast PDSCH and the unicast PDSCH not exceeding a processing capacity of the terminal, receiving the unicast PDSCH sent by a network-side device.

Optionally, in an embodiment of the disclosure, determining the receiving behavior of the broadcast PDSCH and/or the unicast PDSCH, includes:
in response to frequency resources occupied by the broadcast PDSCH and the unicast PDSCH exceeding a processing capacity of the terminal but not exceeding a first preset threshold, determining to receive at least part of the broadcast PDSCH and the unicast PDSCH, in which the first preset threshold is no less than the processing capacity of the terminal.

Optionally, in an embodiment of the disclosure, the method further includes:
withholding from receiving any PDSCH that exceeds the processing capacity of the terminal.

Optionally, in an embodiment of the disclosure, the PDSCH that exceeds the processing capacity of the terminal comes from the same type of PDSCH.

Optionally, in an embodiment of the disclosure, there are a plurality of PDSCHs that exceed the processing capacity of the terminal, and the PDSCHs that exceed the processing capacity of the terminal at least come from two types of PDSCHs.

Optionally, in an embodiment of the disclosure, the method further includes:
in response to configuration information sent by a network-side device, determining a preset threshold.

Optionally, in an embodiment of the disclosure, determining the receiving behavior of the broadcast PDSCH and/or the unicast PDSCH, includes:
determining, according to a preset priority, the receiving behavior of the broadcast PDSCH and/or the unicast PDSCH.

Optionally, in an embodiment of the disclosure, determining, according to the preset priority, the receiving behavior of the broadcast PDSCH and/or the unicast PDSCH, includes:
in response to a priority of the unicast PDSCH being higher than a priority of the broadcast PDSCH, receiving the unicast PDSCH sent by a network-side device, in which resources occupied by the unicast PDSCH are less than a processing capacity of the terminal.

Optionally, in an embodiment of the disclosure, the method further includes:
withholding from receiving the broadcast PDSCH;
   or,
receiving part of the broadcast PDSCHs.

Optionally, in an embodiment of the disclosure, determining, according to the preset priority, the receiving behavior of the broadcast PDSCH and/or the unicast PDSCH, includes:
in response to a priority of the unicast PDSCH being lower than a priority of the broadcast PDSCH, receiving the unicast PDSCH sent by a network-side device, in which resources occupied by the broadcast PDSCH and the unicast PDSCH do not exceed a processing capacity of the terminal.

According to a third aspect of embodiments of the disclosure, a PDSCH transmission apparatus is provided. The apparatus is configured on a network-side, and includes:
a sending module, configured to, in response to a transmission occasion of a broadcast PDSCH, determine whether to send a unicast PDSCH to a terminal on the transmission occasion and/or determine resources allocated to and occupied by a unicast PDSCH of a terminal.

According to a fourth aspect of embodiments of the disclosure, a PDSCH transmission apparatus is provided. The apparatus is configured on a terminal side, and includes:
a receiving module, configured to, in response to a receiving occasion of a broadcast PDSCH, determine a receiving behavior of the broadcast PDSCH and/or a unicast PDSCH.

According to a fifth aspect of embodiments of the disclosure, a network-side device is provided. The device includes a processor and a memory having computer programs stored therein. When the processor executes the computer programs stored in the memory, the device is caused to implement the method proposed in the embodiments of the first aspect.

According to a sixth aspect of embodiments of the disclosure, a terminal is provided. The terminal includes a processor and a memory having computer programs stored therein. When the processor executes the computer programs stored in the memory, the terminal is caused to implement the method proposed in the embodiments of the second aspect.

According to a seventh aspect of embodiments of the disclosure, a communication apparatus is provided. The communication apparatus includes: a processor and an interface circuit.

The interface circuit is configured to receive code instructions and transmit the code instructions to the processor.

The processor is configured to run the code instructions to implement the method proposed in the embodiments of the first aspect.

According to an eighth aspect of embodiments of the disclosure, a communication apparatus is provided. The communication apparatus includes: a processor and an interface circuit.

The interface circuit is configured to receive code instructions and transmit the code instructions to the processor.

The processor is configured to run the code instructions to implement the method proposed in the embodiments of the second aspect.

According to a ninth aspect of embodiments of the disclosure, a computer-readable storage medium for storing instructions is provided. When the instructions are executed, the method described in the first aspect is implemented.

According to a tenth aspect of embodiments of the disclosure, a computer-readable storage medium for storing instructions is provided. When the instructions are executed, the method described in the second aspect is implemented.

In conclusion, in embodiments of the disclosure, in response to a transmission occasion of a broadcast PDSCH, it is determined whether to send a unicast PDSCH to the terminal on the transmission occasion, and/or, it determines resources allocated to and occupied by a unicast PDSCH of a terminal. In the embodiments of the disclosure, the unicast PDSCH and the broadcast PDSCH may be sent, and a transmission mechanism of the unicast PDSCH and the broadcast PDSCH is provided, which may improve a transmission convenience of a plurality of PDSCHs. The disclosure provides a processing method for the case of "PDSCH transmission", to provide the transmission mechanism of the unicast PDSCH and the broadcast PDSCH, which may be used to send the broadcast PDSCH and the unicast PDSCH, thereby improving the transmission convenience of a plurality of PDSCHs.

### BRIEF DESCRIPTION OF THE DRAWINGS

The foregoing and/or additional aspects and advantages of the disclosure will become apparent and readily understood from the following description of embodiments in combination with the accompanying drawings, in which:
FIG. 1 is a flowchart of a physical downlink shared channel (PDSCH) transmission method according to an embodiment of the disclosure.
FIG. 2 is a flowchart of a PDSCH transmission method according to an embodiment of the disclosure.
FIG. 3 is a flowchart of a PDSCH transmission method according to an embodiment of the disclosure.
FIG. 4 is a flowchart of a PDSCH transmission method according to an embodiment of the disclosure.
FIG. 5 is a flowchart of a PDSCH transmission method according to an embodiment of the disclosure.
FIG. 6 is a flowchart of a PDSCH transmission method according to an embodiment of the disclosure.
FIG. 7 is a flowchart of a PDSCH transmission method according to an embodiment of the disclosure.
FIG. 8 is a flowchart of a PDSCH transmission method according to an embodiment of the disclosure.
FIG. 9 is a flowchart of a PDSCH transmission method according to an embodiment of the disclosure.
FIG. 10 is a flowchart of a PDSCH transmission method according to an embodiment of the disclosure.
FIG. 11 is a flowchart of a PDSCH transmission method according to an embodiment of the disclosure.
FIG. 12 is a flowchart of a PDSCH transmission method according to an embodiment of the disclosure.
FIG. 13 is a flowchart of a PDSCH transmission method according to an embodiment of the disclosure.
FIG. 14 is a flowchart of a PDSCH transmission method according to an embodiment of the disclosure.
FIG. 15 is a schematic diagram of a PDSCH transmission apparatus according to an embodiment of the disclosure.
FIG. 16 is a schematic diagram of a PDSCH transmission apparatus according to an embodiment of the disclosure.
FIG. 17 is a block diagram of a terminal according to an embodiment of the disclosure.
FIG. 18 is a block diagram of a network-side device according to an embodiment of the disclosure.

### DETAILED DESCRIPTION

Reference will now be made in detail to embodiments, examples of which are illustrated in the accompanying drawings. The following description refers to the accompanying drawings in which the same numbers in different drawings represent the same or similar elements unless otherwise represented. The implementations set forth in the following description of embodiments do not represent all implementations consistent with the embodiments of the disclosure. Instead, they are merely examples of apparatuses and methods consistent with aspects related to the disclosure as recited in the appended claims.

The terms used in the disclosure are only for the purpose of describing specific embodiments, and are not intended to limit the embodiments of the disclosure. The singular forms of "a" and "the" used in the disclosure and appended claims are also intended to include plural forms, unless the context clearly indicates other meanings. It is understandable that the term "and/or" as used herein refers to and includes any or all possible combinations of one or more associated listed items.

It is understandable that although the terms "first", "second", and "third" may be used in embodiments of the disclosure to describe various types of information, the information should not be limited to these terms. These terms are only used to distinguish the same type of information from each other. For example, without departing from the scope of the embodiments of the disclosure, the first information may also be referred to as the second information, and similarly, the second information may also be referred to as the first information. Depending on the context, the term "if" as used herein may be interpreted as "when", "upon" or "in response to determining".

The network elements or network functions involved in the embodiments of the disclosure may be implemented either by a separate hardware device or by software in the hardware device, which is not limited in the embodiments of the disclosure.

In a long term evolution (LTE) fourth generation (4G) system, machine-type communication (MTC) and Narrow Band Internet of Things (NB-IoT) are proposed to support IoT services. These two technologies are mainly aimed at scenarios with low rate and high delay. The scenarios may include, for example, meter reading, environmental monitoring and other scenarios. Currently, NB-IoT only supports a maximum rate of several hundred k, and MTC only supports a maximum rate of several M. However, with the continuous development of IoT services, such as video monitoring, smart home, wearable devices and industrial sensor monitoring, IoT services usually require a rate of tens to 100M, and also have relatively higher requirements for delay. Therefore, it is difficult for MTC and NB-IoT in the LTE to meet the requirements. Based on this situation, users have proposed to design a new user equipment (UE) in the fifth generation mobile communication technology (5G) new radio (NR) to cover the requirements of mid-range IoT devices. In the 3rd Generation Partnership Project (3GPP), this new UE may be called, for example, reduced capability (RedCap) UE.

In an embodiment of the disclosure, in R18, an enhanced RedCap (eRedCap) UE is introduced, in which eRedCap may include, for example, further reducing a terminal bandwidth. For example, the terminal bandwidth is further reduced from 20MHz to 5MHz at a frequency range (FR) 1. The bandwidth reduction scheme may include, for example, a scheme for reducing a radio frequency (RF) bandwidth and a baseband processing bandwidth simultaneously, or a scheme for not reducing the RF bandwidth but only reducing the baseband processing bandwidth for data, or a scheme for limiting a number of physical resource blocks (PRBs) allocated to data channel.

In the related art, one possible implementation is that the RF bandwidth of the terminal is still 20MHz, but the transmission of data channel (physical downlink shared channel, PDSCH) is limited. For example, a frequency range occupied by the PDSCH should not exceed 5MHz, or a total number of PRBs occupied by the PDSCH should not be greater than the number of PRBs corresponding to 5MHz. For example, when the sub-carrier space (SCS) is 15kHz, the number of PRBs occupied by all the PDSCHs should not be greater than 25 PRBs. When the SCS is 30kHz, the number of PRBs occupied by all the PDSCHs should not be greater than 11 PRBs.

A PDSCH transmission method, a PDSCH transmission apparatus, a device and a storage medium provided by the embodiments of the disclosure will be described in detail with reference to the attached drawings.

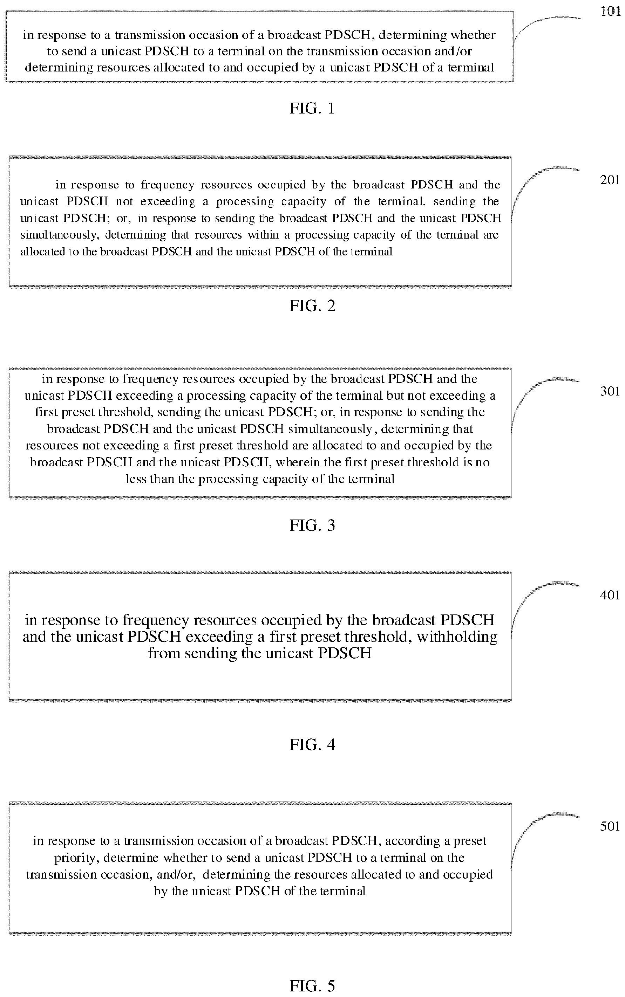

FIG. 1 is a flowchart of a PDSCH transmission method provided by an embodiment of the disclosure. The method is performed by a network-side device. As illustrated in FIG. 1, the method includes the following steps.

At step 101, in response to a transmission occasion of a broadcast PDSCH, it is determined whether to send a unicast PDSCH to a terminal on the transmission occasion, and/or, resources, occupied by a unicast PDSCH, allocated to a terminal are determined.

It is noted that, in an embodiment of the disclosure, the terminal may be a device that provides voice and/or data connectivity to a user. The terminal may communicate with one or more core networks via a Radio Access Network (RAN). The terminal may be an IoT terminal, such as a sensor, a cell phone (or "cellular" phone), and a computer with the IoT terminal. The terminal may also be a stationary, portable, pocket-sized, handheld, computer-built, or vehicle-mounted device, such as, a Station (STA), a subscriber unit, a subscriber station, a mobile station, a mobile, a remote station, an access point, a remote terminal, an access terminal, a user terminal, or a user agent. Alternatively, the terminal may be an unmanned aerial vehicle device. Alternatively, the terminal may be an in-vehicle device, for example, an electronic control unit having wireless communication function, or a wireless terminal external to the electronic control unit. Alternatively, the terminal can also be a roadside device, for example, a street light, a signal light, or other roadside devices having wireless communication functions.

In an embodiment of the disclosure, the PDSCH is configured to carry data from a transport channel DSCH, and the network-side device sends the unicast PDSCH to the terminal, for example, by sending information to the terminal on the unicast PDSCH. The resources allocated to and occupied by the unicast PDSCH of the terminal may be, for example, resources occupied by the unicast PDSCH sent to the terminal.

In an embodiment of the disclosure, the broadcast PDSCH may be monitored by the terminal. For example, the broadcast PDSCH may be a broadcast PDSCH sent to the terminal by the network-side device and needed to be monitored by the terminal.

For example, in an embodiment of the disclosure, the terminal may be, for example, an eRedCap. In R18, the eRedCap may further reduce a terminal bandwidth, for example, the terminal bandwidth may be reduced from 20MHz to 5MHz at the FR1.

In an embodiment of the disclosure, determining whether to send the unicast PDSCH to the terminal on the transmission occasion and/or determining the resources allocated to and occupied by the unicast PDSCH of the terminal, includes:
in response to frequency resources occupied by the broadcast PDSCH and the unicast PDSCH not exceeding a processing capacity of the terminal, sending the unicast PDSCH;
   or,
in response to sending the broadcast PDSCH and the unicast PDSCH simultaneously, determining that resources within a processing capacity of the terminal are allocated to the broadcast PDSCH and the unicast PDSCH of the terminal.

In an embodiment of the disclosure, determining whether to send the unicast PDSCH to the terminal on the transmission occasion and/or determining the resources allocated to and occupied by the unicast PDSCH of the terminal, includes:
in response to frequency resources occupied by the broadcast PDSCH and the unicast PDSCH exceeding a processing capacity of the terminal but not exceeding a preset threshold, sending the unicast PDSCH;
   or,
in response to sending the broadcast PDSCH and the unicast PDSCH simultaneously, determining that resources not exceeding a first preset threshold are allocated to and occupied by the broadcast PDSCH and the unicast PDSCH, wherein the first preset threshold is no less than the processing capacity of the terminal.

In an embodiment of the disclosure, determining whether to send the unicast PDSCH to the terminal on the transmission occasion and/or determining the resources allocated to and occupied by the unicast PDSCH of the terminal, includes:
in response to frequency resources occupied by the broadcast PDSCH and the unicast PDSCH exceeding a first preset threshold, withholding from sending the unicast PDSCH.

In an embodiment of the disclosure, the frequency resources occupied by the broadcast PDSCH and the unicast PDSCH include at least one of:
a number of PRBs occupied by the broadcast PDSCH and the unicast PDSCH; or
a difference value between a lowest frequency point and a highest frequency point in the broadcast PDSCH and the unicast PDSCH.

In an embodiment of the disclosure, the first preset threshold may be configured by a network-side device or may be preset based on a protocol. Different terminals may correspond to different first preset thresholds. The first preset threshold may be determined based on a channel quality. For example, a preset threshold corresponding to a terminal whose channel quality is greater than a quality threshold is greater than a preset threshold corresponding to a terminal whose channel quality is less than the quality threshold. The first preset threshold refers to a threshold corresponding to the resources occupied by the broadcast PDSCH and the unicast PDSCH when the broadcast PDSCH and the unicast PDSCH are sent simultaneously. The term "first" in the first preset threshold is only used to distinguish the first preset threshold from other preset thresholds.

For example, in an embodiment of the disclosure, determining whether to send the unicast PDSCH to the terminal on the transmission occasion and/or determining the resources allocated to and occupied by the unicast PDSCH of the terminal, includes:
according to a preset priority, determining whether to send the unicast PDSCH to the terminal on the transmission occasion and/or determining the resources allocated to and occupied by the unicast PDSCH of the terminal.

In an embodiment of the disclosure, according to the preset priority, determining whether to send the unicast PDSCH to the terminal on the transmission occasion and/or determining the resources allocated to and occupied by the unicast PDSCH of the terminal, includes:
in response to a priority of the unicast PDSCH being higher than a priority of the broadcast PDSCH, sending the unicast PDSCH to the terminal and/or determining that the resources not exceeding a second preset threshold are allocated to and occupied by the unicast PDSCH of the terminal, in which the second preset threshold is no less than a processing capacity of the terminal.

For example, in an embodiment of the disclosure, according to the preset priority, determining whether to send the unicast PDSCH to the terminal on the transmission occasion and/or determining the resources allocated to and occupied by the unicast PDSCH of the terminal, includes:
in response to a priority of the unicast PDSCH being lower than a priority of the broadcast PDSCH, withholding from sending the unicast PDSCH to the terminal;
   or,
in response to a priority of the unicast PDSCH being lower than a priority of the broadcast PDSCH, determining that resources not exceeding a third preset threshold are allocated to and occupied by the broadcast PDSCH and the unicast PDSCH of the terminal, in which the third preset threshold is no less than a processing capacity of the terminal.

In an embodiment of the disclosure, the third preset threshold is configured to indicate a corresponding threshold when determining the resources allocated to and occupied by the broadcast PDSCH and the unicast PDSCH of the terminal according to the preset priority.

For example, in an embodiment of the disclosure, the first preset threshold, the second preset threshold and the third preset threshold may be the same threshold or different thresholds. For example, the first preset threshold, the second preset threshold and the third preset threshold may be identical, or the first preset threshold, the second preset threshold and the third preset threshold may be different preset thresholds, or the first preset threshold and the second preset threshold may be the same threshold, but the first preset threshold is different from the third preset threshold.

In conclusion, in embodiments of the disclosure, in response to a transmission occasion of a broadcast PDSCH, it is determined whether to send a unicast PDSCH to the terminal on the transmission occasion, and/or, resources allocated to and occupied by a unicast PDSCH of a terminal are determined. In the embodiments of the disclosure, the unicast PDSCH and the broadcast PDSCH may be sent, and a transmission mechanism of the unicast PDSCH and the broadcast PDSCH is provided, which can improve a transmission convenience of a plurality of PDSCHs. The disclosure provides a processing method for the case of "PDSCH transmission", to provide a transmission mechanism of the unicast PDSCH and the broadcast PDSCH, which may be used to send the broadcast PDSCH and the unicast PDSCH, thereby improving the transmission convenience of a plurality of PDSCHs.

FIG. 2 is a flowchart of a PDSCH transmission method provided by an embodiment of the disclosure. The method is performed by a network-side device. As illustrated in FIG. 2, the method includes the following steps.

At step 201, in response to frequency resources occupied by a broadcast PDSCH and a unicast PDSCH not exceeding a processing capacity of a terminal, the unicast PDSCH is sent;
or,
in response to sending a broadcast PDSCH and a unicast PDSCH simultaneously, resources within a processing capacity of the terminal are allocated to the broadcast PDSCH and the unicast PDSCH of the terminal.

In an embodiment of the disclosure, the frequency resources occupied by the broadcast PDSCH and the unicast PDSCH include at least one of:
a number of PRBs occupied by the broadcast PDSCH and the unicast PDSCH; or
a difference value between a lowest frequency point and a highest frequency point in the broadcast PDSCH and the unicast PDSCH.

In an embodiment of the disclosure, the lowest frequency point and the highest frequency point in the broadcast PDSCH and the unicast PDSCH may exist in different PDSCHs or in the same PDSCH.

For example, in an embodiment of the disclosure, the lowest frequency point in the broadcast PDSCH and the unicast PDSCH may be the smaller value of the lowest frequency point in the broadcast PDSCH and the lowest frequency point in the unicast PDSCH. For example, if the lowest frequency point in the broadcast PDSCH is smaller than the lowest frequency point in the unicast PDSCH, the lowest frequency point in the broadcast PDSCH and the unicast PDSCH is the lowest frequency point in the broadcast PDSCH.

For example, in an embodiment of the disclosure, the highest frequency point in the broadcast PDSCH and the unicast PDSCH may be the larger value of the highest frequency point in the broadcast PDSCH and the highest frequency point in the unicast PDSCH. For example, if the highest frequency point in the broadcast PDSCH is smaller than the highest frequency point in the unicast PDSCH, the highest frequency point in the broadcast PDSCH and the unicast PDSCH is the highest frequency point in the unicast PDSCH.

In an embodiment of the disclosure, the terminal may send the processing capacity of the terminal to the network-side device. The processing capacity of the terminal refers to a capacity of the terminal to process the PDSCH.

For example, in an embodiment of the disclosure, if the frequency resources occupied by the broadcast PDSCH and the unicast PDSCH do not exceed the processing capacity of the terminal, the unicast PDSCH is sent. For example, the network-side device may send the broadcast PDSCH and the unicast PDSCH to the terminal simultaneously.

In an embodiment of the disclosure, if the broadcast PDSCH and the unicast PDSCH are sent simultaneously, the resources allocated, by the network-side device, to the broadcast PDSCH and the unicast PDSCH of the terminal are within the processing capacity of the terminal. The terminal is able to receive the unicast PDSCH.

For example, in an embodiment of the disclosure, the frequency resources occupied by the broadcast PDSCH and the unicast PDSCH may be, for example, the number of PRBs occupied by the broadcast PDSCH and the unicast PDSCH. For example, when the SCS is 15kHz, the total number of PRBs occupied by the broadcast PDSCH and the unicast PDSCH should not exceed 25.

For example, in an embodiment of the disclosure, the frequency resources occupied by the broadcast PDSCH and the unicast PDSCH may be, for example, a difference value between the lowest frequency point and the highest frequency point in the broadcast PDSCH and the unicast PDSCH. For example, the difference value between the lowest frequency point and the highest frequency point in the broadcast PDSCH and the unicast PDSCH should not exceed 5MHz.

In conclusion, in embodiments of the disclosure, in response to frequency resources occupied by the broadcast PDSCH and the unicast PDSCH not exceeding a processing capacity of the terminal, the unicast PDSCH is sent. Alternatively, in response to sending the broadcast PDSCH and the unicast PDSCH simultaneously, resources allocated to the broadcast PDSCH and the unicast PDSCH of the terminal are within a processing capacity of the terminal. In the embodiments of the disclosure, the unicast PDSCH and the broadcast PDSCH may be sent, and a transmission mechanism of the unicast PDSCH and the broadcast PDSCH is provided, which can improve a transmission convenience of a plurality of PDSCHs. Embodiments of the disclosure include a concrete scheme for sending the unicast PDSCH and a scheme for allocating resources to the broadcast PDSCH and the unicast PDSCH. The disclosure provides a processing method for the case of "PDSCH transmission", to provide a transmission mechanism of the unicast PDSCH and the broadcast PDSCH, which may be used to send the broadcast PDSCH and the unicast PDSCH, thereby improving the transmission convenience of a plurality of PDSCHs.

FIG. 3 is a flowchart of a PDSCH transmission method provided by an embodiment of the disclosure. The method is performed by a network-side device. As illustrated in FIG. 3, the method includes the following steps.

At step 301, in response to frequency resources occupied by the broadcast PDSCH and the unicast PDSCH exceeding a processing capacity of the terminal but not exceeding a first preset threshold, the unicast PDSCH is sent;
or,
in response to sending the broadcast PDSCH and the unicast PDSCH simultaneously, resources not exceeding a first preset threshold are allocated to and occupied by the broadcast PDSCH and the unicast PDSCH, in which the first preset threshold is no less than the processing capacity of the terminal.

In an embodiment of the disclosure, the first preset threshold refers to a threshold that is no less than the processing capacity of the terminal. The preset threshold does not refer to a fixed threshold. The first preset threshold is configured to indicate a threshold corresponding to the resources, determined by the network-side device, occupied by the broadcast PDSCH and the unicast PDSCH when sending the broadcast PDSCH and the unicast PDSCH simultaneously. The term "first" in the first preset threshold is only used to distinguish the first preset threshold from other preset thresholds.

For example, in an embodiment of the disclosure, if the SCS is 15kHz, the processing capacity of the terminal may be 30 PRBs, the first preset threshold may be 30 PRBs, and the number of PRBs occupied by the broadcast PDSCH and the unicast PDSCH may be greater than 25, but not more than 30.

In an embodiment of the disclosure, the frequency resources occupied by the broadcast PDSCH and the unicast PDSCH include at least one of:
a number of PRBs occupied by the broadcast PDSCH and the unicast PDSCH; or
a difference value between a lowest frequency point and a highest frequency point in the broadcast PDSCH and the unicast PDSCH.

In conclusion, in embodiments of the disclosure, in response to frequency resources occupied by the broadcast PDSCH and the unicast PDSCH exceeding the processing capacity of the terminal but not exceeding a first preset threshold, the unicast PDSCH is sent. Alternatively, in response to sending the broadcast PDSCH and the unicast PDSCH simultaneously, resources that do not exceed a first preset threshold are allocated to and occupied by the broadcast PDSCH and the unicast PDSCH, in which the first preset threshold is no less than the processing capacity of the terminal. In the embodiments of the disclosure, the unicast PDSCH and the broadcast PDSCH may be sent, and a transmission mechanism of the unicast PDSCH and the broadcast PDSCH is provided, which can improve a transmission convenience of a plurality of PDSCHs. Embodiments of the disclosure include a concrete scheme for sending the unicast PDSCH and a scheme for allocating resources to the broadcast PDSCH and the unicast PDSCH. The disclosure provides a processing method for the case of "PDSCH transmission", to provide a transmission mechanism of the unicast PDSCH and the broadcast PDSCH, which may be used to send the broadcast PDSCH and the unicast PDSCH, thereby improving the transmission convenience of a plurality of PDSCHs.

FIG. 4 is a flowchart of a PDSCH transmission method provided by an embodiment of the disclosure. The method is performed by a network-side device. As illustrated in FIG. 4, the method includes the following steps.

At step 401, in response to frequency resources occupied by the broadcast PDSCH and the unicast PDSCH exceeding a first preset threshold, the unicast PDSCH is not sent.

In an embodiment of the disclosure, the first preset threshold refers to a threshold that is no less than a processing capacity of the terminal. The preset threshold does not refer to a fixed threshold. The first preset threshold is configured to indicate a threshold corresponding to the resources, determined by the network-side device, occupied by the broadcast PDSCH and the unicast PDSCH when sending the broadcast PDSCH and the unicast PDSCH simultaneously. The term "first" in the first preset threshold is only used to distinguish the first preset threshold from other preset thresholds.

For example, in an embodiment of the disclosure, if the SCS is 15kHz, the processing capacity of the terminal may be 30 PRBs, and the first preset threshold may be 30 PRBs. When the total number of PRBs occupied by the broadcast PDSCH and the unicast PDSCH is greater than 30, the network-side device may abandon sending the unicast PDSCH.

In conclusion, in embodiments of the disclosure, in response to frequency resources occupied by the broadcast PDSCH and the unicast PDSCH exceeding a first preset threshold, the unicast PDSCH is not sent. In the embodiments of the disclosure, the unicast PDSCH and the broadcast PDSCH may be sent based on the frequency resources occupied by the broadcast PDSCH and the unicast PDSCH, and a transmission mechanism of the unicast PDSCH and the broadcast PDSCH is provided, which may improve a transmission convenience of a plurality of PDSCHs. Embodiments of the disclosure are a concrete scheme of abandoning sending the unicast PDSCH. The disclosure provides a processing method for the case of "PDSCH transmission", to provide a transmission mechanism of the unicast PDSCH and the broadcast PDSCH, which may be used to send the broadcast PDSCH and the unicast PDSCH, thereby improving the transmission convenience of a plurality of PDSCHs.

FIG. 5 is a flowchart of a PDSCH transmission method provided by an embodiment of the disclosure. The method is performed by a network-side device. As illustrated in FIG. 5, the method includes the following steps.

At step 501, in response to a transmission occasion of a broadcast PDSCH, according a preset priority, it is determined whether to send a unicast PDSCH to a terminal on the transmission occasion, and/or, resources allocated to and occupied by the unicast PDSCH of a terminal are determined.

In an embodiment of the disclosure, the preset priority may indicate priorities of various PDSCHs. The preset priority may be, for example, that a priority of the broadcast PDSCH is lower than a priority of the unicast PDSCH, and the priority of the unicast PDSCH is lower than a priority of a system information block (SIB) PDSCH. The preset priority may also be that a priority of the broadcast PDSCH is higher than a priority of the unicast PDSCH.

In an embodiment of the disclosure, the network-side device, according to the preset priority, determines whether to send a unicast PDSCH to the terminal on a transmission occasion and/or determines resources allocated to and occupied by a unicast PDSCH of a terminal. For example, in responding to the priority of the unicast PDSCH being higher than the priority of the broadcast PDSCH, the unicast PDSCH is sent to the terminal and/or it is determined that the resources not exceeding a second preset threshold are allocated to and occupied by the unicast PDSCH of the terminal, in which the second preset threshold is no less than a processing capacity of the terminal.

For example, in an embodiment of the disclosure, when a receiving priority of the unicast PDSCH is higher than a receiving priority of the broadcast PDSCH, the network-side device sends the unicast PDSCH to the terminal.

For example, in an embodiment of the disclosure, when the receiving priority of the unicast PDSCH is higher than the receiving priority of the broadcast PDSCH, the network-side device determines that the resources allocated to and occupied by the unicast PDSCH of the terminal do not exceed the second preset threshold, in which the second preset threshold is no less than the processing capacity of the terminal.

In an embodiment of the disclosure, when the network-side device, according to a preset priority, sends a unicast PDSCH to the terminal and/or determines resources allocated to and occupied by the unicast PDSCH of the terminal, in response to a priority of the unicast PDSCH being lower than a priority of the broadcast PDSCH, the network-side device abandons sending the unicast PDSCH to the terminal. Alternatively, in response to the priority of the unicast PDSCH being lower than the priority of the broadcast PDSCH, it is determined that resources not exceeding the second preset threshold are allocated to and occupied by the broadcast PDSCH and the unicast PDSCH of the terminal, in which the second preset threshold is no less than the processing capacity of the terminal.

For example, in an embodiment of the disclosure, when the priority of the unicast PDSCH is lower than the priority of the broadcast PDSCH, the network-side device may abandon sending the unicast PDSCH to the terminal.

For example, in an embodiment of the disclosure, in response to the priority of the SIB PDSCH being higher than the priority of the unicast PDSCH, if the network-side device sends the SIB PDSCH and the unicast PDSCH to the terminal simultaneously, it is determined that the resources occupied by the SIB PDSCH and the unicast PDSCH do not exceed the second preset threshold, in which the second preset threshold is no less than the processing capacity of the terminal.

For example, in an embodiment of the disclosure, the priority of the SIB PDSCH is higher than the priority of the unicast PDSCH. If the network-side device sends the SIB PDSCH and the unicast PDSCH to the terminal simultaneously, in response to resources occupied by the SIB PDSCH and the unicast PDSCH exceeding the second preset threshold, the network-side device abandons sending the unicast PDSCH, in which the second preset threshold is no less than the processing capacity of the terminal.

In conclusion, in embodiments of the disclosure, in response to a transmission occasion of a broadcast PDSCH, according to a preset priority, it is determined whether to send a unicast PDSCH to the terminal on the transmission occasion, and/or, resources occupied and allocated to by the unicast PDSCH of the terminal are determined. In the embodiments of the disclosure, the unicast PDSCH and the broadcast PDSCH may be sent, and a transmission mechanism of the unicast PDSCH and the broadcast PDSCH is provided, which can improve a transmission convenience of a plurality of PDSCHs. Embodiments of the disclosure specifically disclose a scheme for sending the unicast PDSCH according to the preset priority. The disclosure provides a processing method for the case of "PDSCH transmission", to provide a transmission mechanism of the unicast PDSCH and the broadcast PDSCH, which may be used to send the broadcast PDSCH and the unicast PDSCH, thereby improving the transmission convenience of a plurality of PDSCHs.

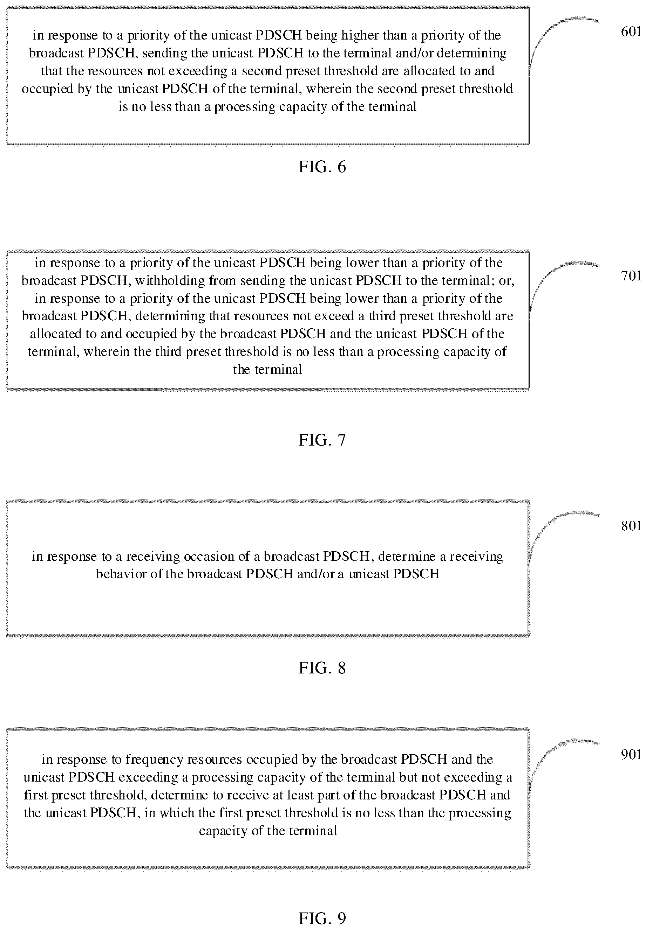

FIG. 6 is a flowchart of a PDSCH transmission method provided by an embodiment of the disclosure. The method is performed by a network-side device. As illustrated in FIG. 6, the method includes the following steps.

At step 601, in response to a priority of a unicast PDSCH being higher than a priority of a broadcast PDSCH, the unicast PDSCH is sent to a terminal and/or it is determined that resources not exceeding a second preset threshold are allocated to and occupied by the unicast PDSCH of the terminal, in which the second preset threshold is no less than a processing capacity of the terminal.

In an embodiment of the disclosure, the second preset threshold is configured to indicate a corresponding threshold when determining resources allocated to and occupied by the unicast PDSCH of the terminal according to a preset priority.

In an embodiment of the disclosure, the network-side device may, according to the preset priority, determine whether to send the unicast PDSCH to the terminal on the transmission occasion and/or determine the resources allocated to and occupied by the unicast PDSCH of the terminal. The preset priority may indicate priorities of various PDSCHs. The preset priority may be, for example, that the priority of the broadcast PDSCH is lower than the priority of the unicast PDSCH, and the priority of the unicast PDSCH is lower than the priority of an SIB PDSCH. The preset priority may also be that the priority of the broadcast PDSCH is higher than the priority of the unicast PDSCH.

In an embodiment of the disclosure, the preset priority may be that the priority of the unicast PDSCH is higher than the priority of the broadcast PDSCH, in which case the network-side device may send the unicast PDSCH to the terminal.

In an embodiment of the disclosure, the preset priority may be that the priority of the unicast PDSCH is higher than the priority of the broadcast PDSCH, in which case the network-side device determines that resources allocated to and occupied by the unicast PDSCH of the terminal do not exceed the second preset threshold, in which the second preset threshold is no less than the processing capacity of the terminal.

In conclusion, in embodiments of the disclosure, in response to a priority of a unicast PDSCH being higher than a priority of a broadcast PDSCH, the unicast PDSCH is sent to the terminal, and/or, it is determined that resource not exceeding a second preset threshold are allocated to and occupied by the unicast PDSCH of a terminal, in which the second preset threshold is no less than the processing capacity of the terminal. In the embodiments of the disclosure, the unicast PDSCH and the broadcast PDSCH may be sent, and a transmission mechanism of the unicast PDSCH and the broadcast PDSCH is provided, which can improve a transmission convenience of a plurality of PDSCHs. Embodiments of the disclosure specifically discloses a scheme for determining the resources occupied by the unicast PDSCH of the terminal according to the preset priority, and sending the PDSCH when the priority of the unicast PDSCH is higher than the priority of the broadcast PDSCH. The disclosure provides a processing method for the case of "PDSCH transmission", to provide a transmission mechanism of the unicast PDSCH and the broadcast PDSCH, which may be used to send the broadcast PDSCH and the unicast PDSCH, thereby improving the transmission convenience of a plurality of PDSCH.

FIG. 7 is a flowchart of a PDSCH transmission method provided by an embodiment of the disclosure. The method is performed by a network-side device. As illustrated in FIG. 7, the method includes the following steps.

At step 701, in response to a priority of a unicast PDSCH being lower than a priority of a broadcast PDSCH, the unicast PDSCH is not sent to the terminal;
or,
in response to a priority of a unicast PDSCH being lower than a priority of a broadcast PDSCH, it is determined that resources not exceeding a third preset threshold are allocated to and occupied by the broadcast PDSCH and the unicast PDSCH of the terminal, in which the third preset threshold is no less than a processing capacity of the terminal.

In an embodiment of the disclosure, the third preset threshold is configured to indicate a corresponding threshold when determining, according to the preset priority, resources allocated to and occupied by the broadcast PDSCH and the unicast PDSCH of the terminal. The term "third" in the third preset threshold is only used to distinguish the third preset threshold from other preset thresholds.

In an embodiment of the disclosure, the network-side device may, according to the preset priority, determine whether to send the unicast PDSCH to the terminal on the transmission occasion and/or determine the resources allocated to and occupied by the unicast PDSCH of the terminal. The preset priority may indicate priorities of various PDSCHs. The preset priority may be, for example, that the priority of the broadcast PDSCH is lower than the priority of the unicast PDSCH, and the priority of the unicast PDSCH is lower than a priority of an SIB PDSCH. The preset priority may also be that the priority of the broadcast PDSCH is higher than the priority of the unicast PDSCH.

In an embodiment of the disclosure, the preset priority may be that the priority of the unicast PDSCH is lower than the priority of the broadcast PDSCH, in which case the network-side device may abandon sending the unicast PDSCH to the terminal.

In an embodiment of the disclosure, the preset priority may be that the priority of the unicast PDSCH is higher than the priority of the broadcast PDSCH, in which case the network-side device determines that resources allocated to and occupied by the broadcast PDSCH and the unicast PDSCH of the terminal do not exceed the third preset threshold, in which the third preset threshold is no less than the processing capacity of the terminal.

In conclusion, in embodiments of the disclosure, in response to the priority of the unicast PDSCH being lower than the priority of the broadcast PDSCH, the unicast PDSCH is not sent to the terminal. Alternatively, in response to the priority of the unicast PDSCH being lower than the priority of the broadcast PDSCH, it is determined that the resources allocated to and occupied by the broadcast PDSCH and the unicast PDSCH of the terminal do not exceed the third preset threshold, in which the third preset threshold is no less than the processing capacity of the terminal. In the embodiments of the disclosure, the unicast PDSCH and the broadcast PDSCH may be sent, and a transmission mechanism of the unicast PDSCH and the broadcast PDSCH is provided, which may improve a transmission convenience of a plurality of PDSCHs. Embodiments of the disclosure specifically disclose a scheme for sending the PDSCH when the priority of the unicast PDSCH is lower than the priority of the broadcast PDSCH. The disclosure provides a processing method for the case of "PDSCH transmission", to provide a mechanism of transmission of the unicast PDSCH and the broadcast PDSCH, which may be used to send the broadcast PDSCH and the unicast PDSCH, thereby improving the transmission convenience of a plurality of PDSCHs.

FIG. 8 is a flowchart of a PDSCH transmission method provided by an embodiment of the disclosure. The method is performed by a terminal. As illustrated in FIG. 8, the method includes the following steps.

At step 801, in response to a receiving occasion of a broadcast PDSCH, a receiving behavior of the broadcast PDSCH and/or a unicast PDSCH is determined.

In an embodiment of the disclosure, determining the receiving behavior of the broadcast PDSCH and/or the unicast PDSCH, includes:
in response to frequency resources occupied by the broadcast PDSCH and the unicast PDSCH not exceeding a processing capacity of the terminal, receiving the unicast PDSCH sent by a network-side device.

In an embodiment of the disclosure, determining the receiving behavior of the broadcast PDSCH and/or the unicast PDSCH, includes:
in response to frequency resources occupied by the broadcast PDSCH and the unicast PDSCH exceeding a processing capacity of the terminal but not exceeding a first preset threshold, determining to receive at least part of the broadcast PDSCH and the unicast PDSCH, in which the first preset threshold is no less than the processing capacity of the terminal.

In an embodiment of the disclosure, the method further includes:
withholding from receiving any PDSCH that exceeds the processing capacity of the terminal.

In an embodiment of the disclosure, the PDSCH that exceeds the processing capacity of the terminal comes from the same type of PDSCH.

In an embodiment of the disclosure, there are a plurality of PDSCHs that exceed the processing capacity of the terminal, and the PDSCHs that exceed the processing capacity of the terminal at least come from two types of PDSCHs.

In an embodiment of the disclosure, the method further includes:
in response to configuration information sent by a network-side device, determining a preset threshold.

In an embodiment of the disclosure, determining the receiving behavior of the broadcast PDSCH and/or the unicast PDSCH, includes:
determining, according to a preset priority, the receiving behavior of the broadcast PDSCH and/or the unicast PDSCH.

In an embodiment of the disclosure, determining, according to a preset priority, the receiving behavior of the broadcast PDSCH and/or the unicast PDSCH, includes:
in response to a priority of the unicast PDSCH being higher than a priority of the broadcast PDSCH, receiving the unicast PDSCH sent by a network-side device, in which resources occupied by the unicast PDSCH are less than a processing capacity of the terminal.

In an embodiment of the disclosure, the method further includes:
withholding from receiving the broadcast PDSCH;
   or,
receiving part of the broadcast PDSCHs.

In an embodiment of the disclosure, determining, according to the preset priority, the receiving behavior of the broadcast PDSCH and/or the unicast PDSCH, includes:
in response to a priority of the unicast PDSCH being lower than a priority of the broadcast PDSCH, receiving the unicast PDSCH sent by a network-side device, in which resources occupied by the broadcast PDSCH and the unicast PDSCH do not exceed a processing capacity of the terminal.

In conclusion, in embodiments of the disclosure, in response to a receiving occasion of a broadcast PDSCH, the receiving behavior of the broadcast PDSCH and/or the unicast PDSCH is determined. In the embodiments of the disclosure, by determining the receiving behavior of the broadcast PDSCH and/or the unicast PDSCH, the unicast PDSCH and the broadcast PDSCH may be sent, and a transmission mechanism of the unicast PDSCH and the broadcast PDSCH is provided, which may improve a transmission convenience of a plurality of PDSCHs. The disclosure provides a processing method for the case of "PDSCH transmission", to provide a mechanism of transmission of the unicast PDSCH and the broadcast PDSCH, which may be used to send the broadcast PDSCH and the unicast PDSCH, thereby improving the transmission convenience of a plurality of PDSCHs.

FIG. 9 is a flowchart of a PDSCH transmission method provided by an embodiment of the disclosure. The method is performed by a terminal. As illustrated in FIG. 9, the method includes the following steps.

At step 901, in response to frequency resources occupied by a broadcast PDSCH and a unicast PDSCH exceeding a processing capacity of a terminal but not exceeding a first preset threshold, it is determined to receive at least part of the broadcast PDSCH and the unicast PDSCH, in which the first preset threshold is no less than the processing capacity of the terminal.

In an embodiment of the disclosure, the processing capacity of the terminal is configured to indicate a capacity of the terminal to receive the PDSCH, which may be frequency resources in the terminal that support to receive the PDSCH.

In an embodiment of the disclosure, in response to the terminal determining that the frequency resources occupied by the broadcast PDSCH and the unicast PDSCH do not exceed the processing capacity of the terminal and the first preset threshold, the terminal may receive at least part of the broadcast PDSCH and the unicast PDSCH.

In conclusion, in embodiments of the disclosure, in response to the frequency resources occupied by the broadcast PDSCH and the unicast PDSCH exceeding the processing capacity of the terminal but not exceeding the first preset threshold, it is determined to receive at least part of the broadcast PDSCH and the unicast PDSCH, in which the first preset threshold is no less than the processing capacity of the terminal. In the embodiments of the disclosure, if the frequency resources occupied by the broadcast PDSCH and the unicast PDSCH exceed the processing capacity of the terminal but do not exceed the first preset threshold, the terminal may determine to receive at least part of the broadcast PDSCH and the unicast PDSCH. The embodiments of the disclosure may provide a mechanism for receiving the unicast PDSCH and the broadcast PDSCH, improving a transmission convenience of a plurality of PDSCHs. The disclosure provides a processing method for the case of "PDSCH transmission", to provide a mechanism of transmission of the unicast PDSCH and the broadcast PDSCH, which may be used to send the broadcast PDSCH and the unicast PDSCH, thereby improving the transmission convenience of a plurality of PDSCHs.

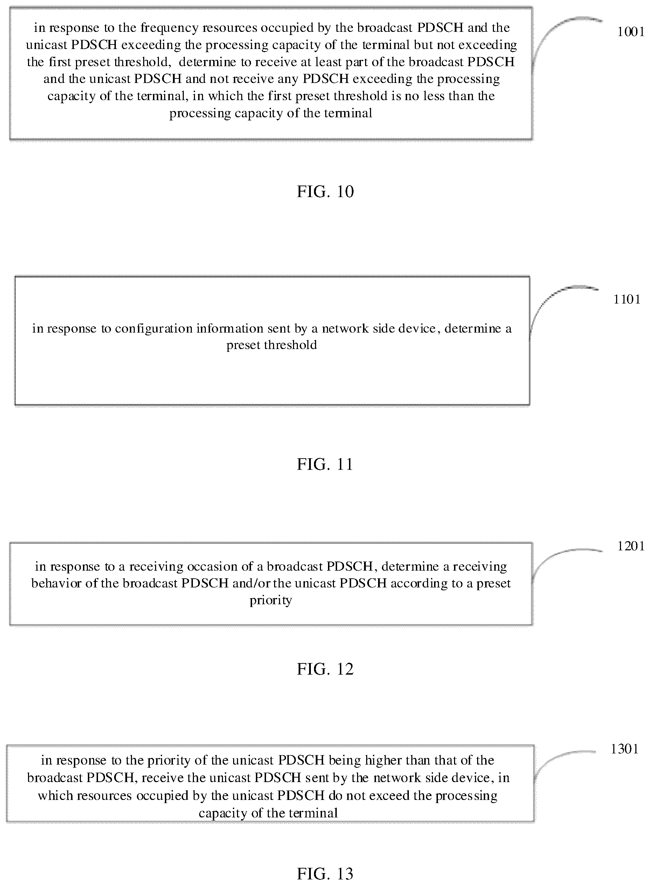

FIG. 10 is a flowchart of a PDSCH transmission method provided by an embodiment of the disclosure. The method is performed by a terminal. As illustrated in FIG. 10, the method includes the following steps.

At step 1001, in response to frequency resources occupied by a broadcast PDSCH and a unicast PDSCH exceeding a processing capacity of a terminal but not exceeding a first preset threshold, it is determined to receive at least part of the broadcast PDSCH and the unicast PDSCH and not receive any PDSCH exceeding the processing capacity of the terminal, in which the first preset threshold is no less than the processing capacity of the terminal.

In an embodiment of the disclosure, in response to the frequency resources occupied by the broadcast PDSCH and the unicast PDSCH exceeding the processing capacity of the terminal but not exceeding the first preset threshold, it is determined to receive at least part of the broadcast PDSCH and the unicast PDSCH, and abandon receiving the PDSCH exceeding the processing capacity of the terminal. For example, the terminal may not receive all of the broadcast PDSCH and the unicast PDSCH. The first preset threshold is no less than the processing capacity of the terminal.

For example, in an embodiment of the disclosure, if the SCS is 15kHz, the processing capacity of the terminal may be 30 PRBs, the first preset threshold may be 30 PRBs, and a total number of PRBs occupied by the broadcast PDSCH and the unicast PDSCH may be 35, the terminal may abandon receiving the PDSCHs exceeding 30 PRBs.

In an embodiment of the disclosure, the PDSCH that exceeds the processing capacity of the terminal comes from the same type of PDSCH.

In an embodiment of the disclosure, the PDSCH that exceeds the processing capacity of the terminal comes from the same type of PDSCH, which may be, for example, the unicast PDSCH. For example, the PDSCH that exceeds the processing capacity of the terminal comes from the unicast PDSCH.

For example, in an embodiment of the disclosure, in response to the frequency resources occupied by the broadcast PDSCH and the unicast PDSCH exceeding the processing capacity of the terminal but not exceeding the first preset threshold, the terminal may receive the broadcast PDSCH while abandon receiving the PDSCH that exceeds the processing capacity of the terminal. The PDSCH that exceeds the processing capacity of the terminal belongs to the unicast PDSCH.

In an embodiment of the disclosure, the PDSCH that exceeds the processing capacity of the terminal at least comes from two types of PDSCHs. For example, in response to the frequency resources occupied by the broadcast PDSCH and the unicast PDSCH exceeding the processing capacity of the terminal but not exceeding the first preset threshold, the terminal may abandon receiving part of the broadcast PDSCH and part of the unicast PDSCH. For example, the terminal may abandon receiving at least one first PDSCH and at least one second PDSCH, in which the at least one first PDSCH comes from the unicast PDSCH and the at least one second PDSCH comes from the broadcast PDSCH.

In an embodiment of the disclosure, the at least one first PDSCH refers to the PDSCH from the unicast PDSCH and reception of which is refused. The at least one second PDSCH refers to the PDSCH from the broadcast PDSCH and reception of which is refused. The term "first" in the first PDSCH is only used to distinguish the first PDSCH from the second PDSCH, and the first PDSCH does not specifically refer to a fixed PDSCH.

In conclusion, in embodiments of the disclosure, in response to the frequency resources occupied by the broadcast PDSCH and the unicast PDSCH exceeding the processing capacity of the terminal but not exceeding the first preset threshold, it is determined to receive at least part of the broadcast PDSCH and the unicast PDSCH and to abandon receiving the PDSCH exceeding the processing capacity of the terminal, in which the first preset threshold is no less than the processing capacity of the terminal. In embodiments of the disclosure, the frequency resources occupied by the broadcast PDSCH and the unicast PDSCH exceed the processing capacity of the terminal but do not exceed the first preset threshold, the terminal determines to receive at least part of the broadcast PDSCH and the unicast PDSCH, and abandons receiving the PDSCH that exceeds the processing capacity of the terminal. Embodiments of the disclosure provide a mechanism for receiving the unicast PDSCH and the broadcast PDSCH, which may improve a convenience of transmission of a plurality of PDSCHs. The disclosure provides a processing method for the case of "PDSCH transmission", to provide a mechanism of transmission of the unicast PDSCH and the broadcast PDSCH, which may be used to send the broadcast PDSCH and the unicast PDSCH, thereby improving the convenience of transmission of a plurality of PDSCHs.

FIG. 11 is a flowchart of a PDSCH transmission method provided by an embodiment of the disclosure. The method is performed by a terminal. As illustrated in FIG. 11, the method includes the following steps.

At step 1101, in response to configuration information sent by a network-side device, a preset threshold is determined.

In an embodiment of the disclosure, the terminal may determine the preset threshold according to the configuration information sent by the network-side device.

For example, in an embodiment of the disclosure, the terminal may also determine the preset threshold based on a preset protocol.

In conclusion, in embodiments of the disclosure, the preset threshold is determined in response to the configuration information sent by the network-side device. In embodiments of the disclosure, the preset threshold is determined based on the configuration information, which may improve an accuracy of determining the preset threshold and reduce mismatch between the preset threshold and a signal quality, so as to improve a convenience of transmission of a plurality of PDSCHs. The disclosure provides a processing method for the case of "PDSCH transmission" to provide a mechanism for determining the preset threshold, which be used to send the broadcast PDSCH and the unicast PDSCH, thereby improving the convenience of transmission of a plurality of PDSCHs.

FIG. 12 is a flowchart of a PDSCH transmission method provided by an embodiment of the disclosure. The method is performed by a terminal. As illustrated in FIG. 12, the method includes the following steps.

At step 1201, in response to a receiving occasion of a broadcast PDSCH, a receiving behavior of the broadcast PDSCH and/or a unicast PDSCH is determined according to a preset priority.

In an embodiment of the disclosure, the preset priority may indicate priorities of various PDSCHs. The preset priority does not refer to a fixed priority. The preset priority may be, for example, that a priority of the broadcast PDSCH is lower than a priority of the unicast PDSCH, and the priority of the unicast PDSCH is lower than a priority of an SIB PDSCH. The preset priority may also be that the priority of the broadcast PDSCH is higher than the priority of the unicast PDSCH.

In an embodiment of the disclosure, when the terminal determines the receiving behavior of the broadcast PDSCH and/or the unicast PDSCH according to the preset priority, it may receive the unicast PDSCH sent by the network-side device in response to that the priority of the unicast PDSCH is higher than the priority of the broadcast PDSCH. The resources occupied by the unicast PDSCH do not exceed the processing capacity of the terminal.

For example, in an embodiment of the disclosure, the method further includes that the terminal abandons receiving the broadcast PDSCH or the terminal receives part of the broadcast PDSCH. For example, in response to the priority of the unicast PDSCH being higher than the priority of the broadcast PDSCH, the terminal may abandon receiving the broadcast PDSCH.

In an embodiment of the disclosure, when the terminal determines the receiving behavior of the broadcast PDSCH and/or the unicast PDSCH according to the preset priority, it may receive the unicast PDSCH sent by the network-side device in response to that the priority of the unicast PDSCH is lower than the priority of the broadcast PDSCH. The resources occupied by the broadcast PDSCH and the unicast PDSCH do not exceed the processing capacity of the terminal.

In an embodiment of the disclosure, when the terminal determines the receiving behavior of the broadcast PDSCH and/or the unicast PDSCH according to the preset priority, it may receive the SIB PDSCH and the unicast PDSCH sent by the network-side device in response to the priority of the SIB PDSCH being higher than the priority of the unicast PDSCH. The resources occupied by the SIB PDSCH and the unicast PDSCH do not exceed the processing capacity of the terminal.

In an embodiment of the disclosure, when the network-side device sends the SIB PDSCH and the unicast PDSCH simultaneously, and the terminal determines the receiving behavior of PDSCH according to the preset priority, in response to that the resources occupied by the SIB PDSCH and the unicast PDSCH exceed the processing capacity of the terminal, the terminal abandons receiving the unicast PDSCH sent by the network-side device.

In conclusion, in embodiments of the disclosure, in response to the receiving occasion of the broadcast PDSCH, the receiving behavior of the broadcast PDSCH and/or the unicast PDSCH is determined according to the preset priority. In embodiments of the disclosure, according to the preset priority, the unicast PDSCH sent by the network-side device is received, and a mechanism for receiving the unicast PDSCH and the broadcast PDSCH is provided, which may improve the convenience of transmission of a plurality of PDSCHs. Embodiments of the disclosure specifically disclose a scheme of abandoning receiving the PDSCH exceeding a preset threshold and belonging to different types of PDSCH. The disclosure provides a processing method for the case of "PDSCH transmission", to provide a mechanism of transmission of unicast PDSCH and broadcast PDSCH, which may be used to send the broadcast PDSCH and the unicast PDSCH, thereby improving the convenience of transmission of a plurality of PDSCHs.

FIG. 13 is a flowchart of a PDSCH transmission method provided by an embodiment of the disclosure. The method is performed by a terminal. As illustrated in FIG. 13, the method includes the following steps.

At step 1301, in response to a priority of a unicast PDSCH being higher than a priority of a broadcast PDSCH, the unicast PDSCH sent by a network-side device is received, in which resources occupied by the unicast PDSCH do not exceed a processing capacity of the terminal.

In an embodiment of the disclosure, when the terminal determines the receiving behavior of the broadcast PDSCH and/or the unicast PDSCH according to the preset priority, it may receive the unicast PDSCH sent by the network-side device in response to that the priority of the unicast PDSCH is higher than the priority of the broadcast PDSCH. The resources occupied by the unicast PDSCH do not exceed the processing capacity of the terminal.

For example, in an embodiment of the disclosure, the method further includes that the terminal abandons receiving the broadcast PDSCH or the terminal receive part of the broadcast PDSCH. For example, in response to the priority of the unicast PDSCH being higher than the priority of the broadcast PDSCH, the terminal may abandon receiving the broadcast PDSCH.

In conclusion, in embodiments of the disclosure, in response to the priority of the unicast PDSCH being higher than the priority of the broadcast PDSCH, the unicast PDSCH sent by the network-side device is received. The resources occupied by the unicast PDSCH do not exceed the processing capacity of the terminal. In embodiments of the disclosure, according to the preset priority, the unicast PDSCH sent by the network-side device is received, which may provide a mechanism for receiving the unicast PDSCH and the broadcast PDSCH, thereby improving a convenience of transmission of a plurality of PDSCHs. Embodiments of the disclosure specifically disclose a scheme for receiving PDSCH when the priority of the unicast PDSCH is higher than the priority of the broadcast PDSCH. The disclosure provides a processing method for the case of "PDSCH transmission", to provide a mechanism of transmission of unicast PDSCH and broadcast PDSCH, which may be used to send the broadcast PDSCH and the unicast PDSCH, thereby improving the convenience of transmission of a plurality of PDSCHs.

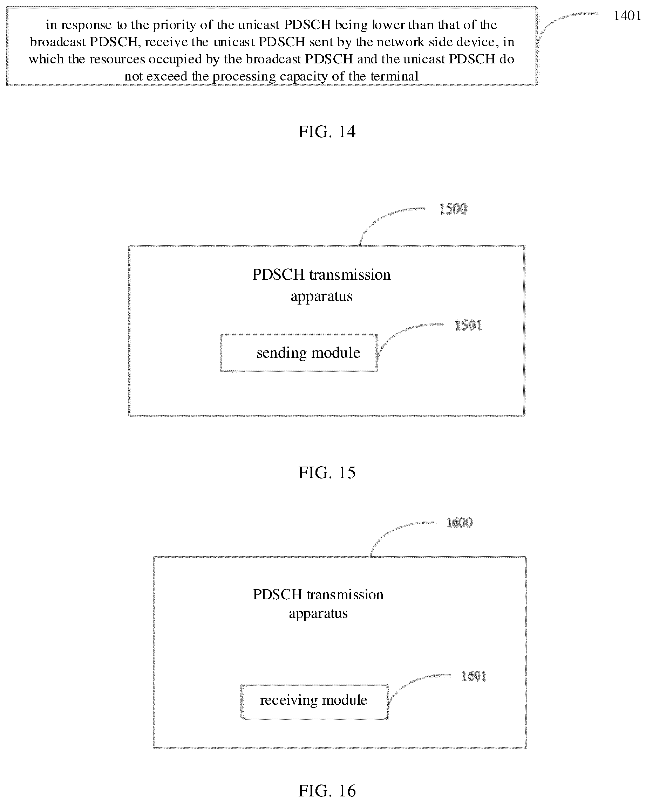

FIG. 14 is a flowchart of a PDSCH transmission method provided by an embodiment of the disclosure. The method is performed by a terminal. As illustrated in FIG. 14, the method includes the following steps.

At step 1401, in response to a priority of a unicast PDSCH being lower than a priority of a broadcast PDSCH, the unicast PDSCH sent by a network-side device is received, in which the resources occupied by the broadcast PDSCH and the unicast PDSCH do not exceed a processing capacity of the terminal.

In conclusion, in embodiments of the disclosure, in response to the priority of the unicast PDSCH being lower than the priority of the broadcast PDSCH, the unicast PDSCH sent by the network-side device is received. The resources occupied by the broadcast PDSCH and the unicast PDSCH do not exceed the processing capacity of the terminal. In embodiments of the disclosure, according to the preset priority, the unicast PDSCH sent by the network-side device is received, which can provide a mechanism for receiving the unicast PDSCH and the broadcast PDSCH, thereby improving a convenience of transmission of a plurality PDSCHs. Embodiments of the disclosure specifically disclose a scheme for receiving PDSCH when the priority of the unicast PDSCH is lower than that of the broadcast PDSCH. The disclosure provides a processing method for the case of "PDSCH transmission", to provide a mechanism of transmission of unicast PDSCH and broadcast PDSCH, which may be used to send the broadcast PDSCH and the unicast PDSCH, thereby improving the convenience of transmission of a plurality of PDSCHs.

FIG. 15 is a schematic diagram of a PDSCH transmission apparatus provided by an embodiment of the disclosure. As illustrated in FIG. 15, the apparatus is provided on a network-side. The apparatus 1500 includes:
a sending module 1501, configured to, in response to a transmission occasion of a broadcast PDSCH, determine whether to send a unicast PDSCH to a terminal on the transmission occasion and/or determine resources allocated to and occupied by a unicast PDSCH of a terminal.

In conclusion, in the PDSCH transmission apparatus in embodiments of the disclosure, in response to a transmission occasion of a broadcast PDSCH, the sending module determines whether to send a unicast PDSCH to the terminal on the transmission occasion and/or determines resources allocated to and occupied by the unicast PDSCH of the terminal. In the embodiments of the disclosure, it may be determined whether to send the unicast PDSCH and the broadcast PDSCH, and a transmission mechanism of the unicast PDSCH and the broadcast PDSCH is provided, which may improve a transmission convenience of a plurality of PDSCHs. The disclosure provides a processing apparatus for the case of "PDSCH transmission", to provide the transmission mechanism of the unicast PDSCH and the broadcast PDSCH, which may be used to send the broadcast PDSCH and the unicast PDSCH, thereby improving the transmission convenience of a plurality of PDSCHs.

Optionally, in an embodiment of the disclosure, when determining whether to send the unicast PDSCH to the terminal on the transmission occasion and/or determining the resources allocated to and occupied by the unicast PDSCH of the terminal, the sending module 1501 is configured to:
in response to frequency resources occupied by the broadcast PDSCH and the unicast PDSCH not exceeding a processing capacity of the terminal, send the unicast PDSCH;
   or,
in response to sending the broadcast PDSCH and the unicast PDSCH simultaneously, determine that resources within a processing capacity of the terminal are allocated to the broadcast PDSCH and the unicast PDSCH of the terminal.

Optionally, in an embodiment of the disclosure, when determining whether to send the unicast PDSCH to the terminal on the transmission occasion and/or determining the resources allocated to and occupied by the unicast PDSCH of the terminal, the sending module 1501 is configured to:
in response to frequency resources occupied by the broadcast PDSCH and the unicast PDSCH exceeding a processing capacity of the terminal but not exceeding a first preset threshold, send the unicast PDSCH;
   or,
in response to sending the broadcast PDSCH and the unicast PDSCH simultaneously, determine that resources not exceeding a first preset threshold are allocated to and occupied by the broadcast PDSCH and the unicast PDSCH, wherein the first preset threshold is no less than the processing capacity of the terminal.

Optionally, in an embodiment of the disclosure, when determining whether to send the unicast PDSCH to the terminal on the transmission occasion and/or determining the resources allocated to and occupied by the unicast PDSCH of the terminal, the sending module 1501 is configured to:
in response to frequency resources occupied by the broadcast PDSCH and the unicast PDSCH exceeding a first preset threshold, withhold from sending the unicast PDSCH.

Optionally, in an embodiment of the disclosure, the frequency resources occupied by the broadcast PDSCH and the unicast PDSCH include at least one of:
a number of PRBs occupied by the broadcast PDSCH and the unicast PDSCH; or
a difference value between a lowest frequency point and a highest frequency point in the broadcast PDSCH and the unicast PDSCH.

Optionally, in an embodiment of the disclosure, when determining whether to send the unicast PDSCH to the terminal on the transmission occasion and/or determining the resources allocated to and occupied by the unicast PDSCH of the terminal, the sending module 1501 is configured to:
according to a preset priority, determine whether to send the unicast PDSCH to the terminal on the transmission occasion and/or determine the resources allocated to and occupied by the unicast PDSCH of the terminal.

Optionally, in an embodiment of the disclosure, when according to the preset priority, determining whether to send the unicast PDSCH to the terminal on the transmission occasion and/or determining the resources allocated to and occupied by the unicast PDSCH of the terminal, the sending module 1501 is configured to:
in response to a priority of the unicast PDSCH being higher than a priority of the broadcast PDSCH, send the unicast PDSCH to the terminal and/or determine that the resources not exceeding a second preset threshold are allocated to and occupied by the unicast PDSCH of the terminal, in which the second preset threshold is no less than a processing capacity of the terminal.

Optionally, in an embodiment of the disclosure, when according to the preset priority, determining whether to send the unicast PDSCH to the terminal on the transmission occasion and/or determining the resources allocated to and occupied by the unicast PDSCH of the terminal, the sending module 1501 is configured to:
in response to a priority of the unicast PDSCH being lower than a priority of the broadcast PDSCH, withhold from sending send the unicast PDSCH to the terminal;
   or,
in response to the priority of the unicast PDSCH being lower than the priority of the broadcast PDSCH, determine that resources not exceeding a third preset threshold are allocated to and occupied by the broadcast PDSCH and the unicast PDSCH of the terminal, in which the third preset threshold is no less than a processing capacity of the terminal.

FIG. 16 is a schematic diagram of a PDSCH transmission apparatus provided by an embodiment of the disclosure. As illustrated in FIG. 16, the apparatus is provided on a terminal side. The apparatus 1600 includes:
a receiving module 1601, configured to, in response to a receiving occasion of a broadcast PDSCH, determine a receiving behavior of the broadcast PDSCH and/or a unicast PDSCH.

In conclusion, in the PDSCH transmission apparatus of embodiments of the disclosure, the receiving module determines the receiving behavior of the broadcast PDSCH and/or the unicast PDSCH in response to the receiving occasion of the broadcast PDSCH. In embodiments of the disclosure, the unicast PDSCH and the broadcast PDSCH are received, and a mechanism for transmission of unicast PDSCH and broadcast PDSCH is provided, which may improve the convenience of transmission of a plurality of PDSCHs. The disclosure provides a processing apparatus for the case of "PDSCH transmission" to provide a mechanism for transmission of unicast PDSCH and broadcast PDSCH, which may be used to send the broadcast PDSCH and the unicast PDSCH, thereby improving the convenience of transmission of a plurality of PDSCHs.

Optionally, in an embodiment of the disclosure, when determining the receiving behavior of the broadcast PDSCH and/or the unicast PDSCH, the receiving module 1601 is configured to:
in response to frequency resources occupied by the broadcast PDSCH and the unicast PDSCH not exceeding a processing capacity of the terminal, receive the unicast PDSCH sent by a network-side device.

Optionally, in an embodiment of the disclosure, when determining the receiving behavior of the broadcast PDSCH and/or the unicast PDSCH, the receiving module 1601 is configured to:
in response to frequency resources occupied by the broadcast PDSCH and the unicast PDSCH exceeding a processing capacity of the terminal but not exceeding a first preset threshold, determine to receive at least part of the broadcast PDSCH and the unicast PDSCH, in which the first preset threshold is no less than the processing capacity of the terminal.

Optionally, in an embodiment of the disclosure, the receiving module 1601 is further configured to:
withhold from receiving any PDSCH that exceeds the processing capacity of the terminal.

Optionally, in an embodiment of the disclosure, the PDSCH that exceeds the processing capacity of the terminal comes from the same type of PDSCH.

Optionally, in an embodiment of the disclosure, there are a plurality of PDSCHs that exceed the processing capacity of the terminal, and the PDSCHs that exceed the processing capacity of the terminal at least come from two types of PDSCHs.

Optionally, in an embodiment of the disclosure, the receiving module 1601 is further configured to:
in response to configuration information sent by a network-side device, determine the preset threshold.

Optionally, in an embodiment of the disclosure, when determining the receiving behavior of the broadcast PDSCH and/or the unicast PDSCH, the receiving module 1601 is configured to:
determining, according to a preset priority, the receiving behavior of the broadcast PDSCH and/or the unicast PDSCH.

Optionally, in an embodiment of the disclosure, when determining, according to a preset priority, the receiving behavior of the broadcast PDSCH and/or the unicast PDSCH, the receiving module 1601 is configured to:
in response to a priority of the unicast PDSCH being higher than a priority of the broadcast PDSCH, receive the unicast PDSCH sent by a network-side device, in which resources occupied by the unicast PDSCH are less than a processing capacity of the terminal.

Optionally, in an embodiment of the disclosure, the receiving module 1601 is further configured to:
withhold from receiving the broadcast PDSCH;
   or,
receive part of the broadcast PDSCHs.

Optionally, in an embodiment of the disclosure, when determining, according to the preset priority, the receiving behavior of the broadcast PDSCH and/or the unicast PDSCH, the receiving module 1601 is configured to:
in response to a priority of the unicast PDSCH being lower than a priority of the broadcast PDSCH, receive the unicast PDSCH sent by a network-side device, in which resources occupied by the broadcast PDSCH and the unicast PDSCH do not exceed a processing capacity of the terminal.

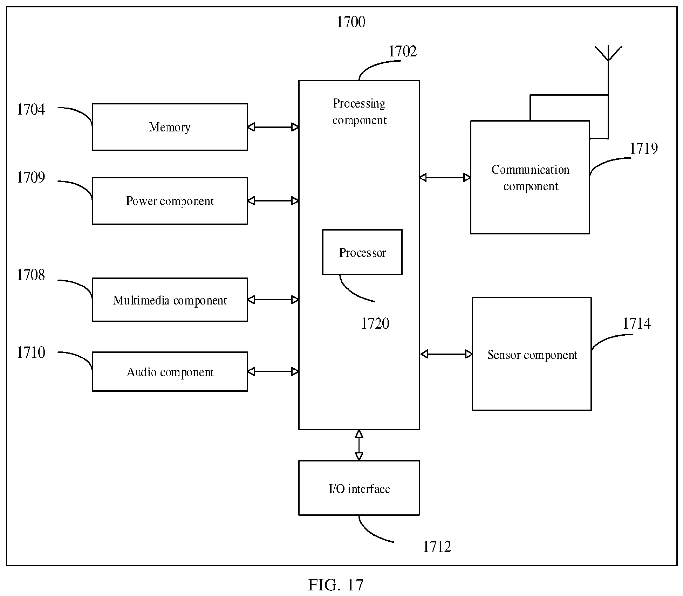

FIG. 17 is a block diagram of a UE 1700 provided by an embodiment of the disclosure. For example, the UE 1700 may be a mobile phone, a computer, a digital broadcast terminal, a message transceiver device, a game console, a tablet device, a medical device, a fitness device, or a personal digital assistant.

As illustrated in FIG. 17, the UE 1700 may include at least one of the following components: a processing component 1702, a memory 1704, a power component 1706, a multimedia component 1708, an audio component 1710, an input/output (I/O) interface 1712, a sensor component 1714, and a communication component 1716.

The processing component 1702 typically controls overall operations of the UE 1700, such as the operations associated with display, telephone calls, data communications, camera operations, and recording operations. The processing component 1702 may include at least one processor 1720 to perform all or part of the steps in the method described above. Moreover, the processing component 1702 may include at least one module which facilitate the interaction between the processing component 1702 and other components. For example, the processing component 1702 may include a multimedia module to facilitate the interaction between the multimedia component 1708 and the processing component 1702.

The memory 1704 is configured to store various types of data to support the operation of the UE 1700. Examples of such data include instructions for any applications or methods operated on the UE 1700, contact data, phonebook data, messages, pictures, video, etc. The memory 1704 may be implemented using any type of volatile or non-volatile memory devices, or a combination thereof, such as a Static Random-Access Memory (SRAM), an Electrically-Erasable Programmable Read Only Memory (EEPROM), an Erasable Programmable Read Only Memory (EPROM), a Programmable Read Only Memory (PROM), a Read Only Memory (ROM), a magnetic memory, a flash memory, a magnetic or optical disk.

The power component 1706 provides power to various components of the UE 1700. The power component 1706 may include a power management system, at least one power source, and any other components associated with the generation, management, and distribution of power in the UE 1700.

The multimedia component 1708 includes a screen providing an output interface between the UE 1700 and the user. In some embodiments, the screen may include a Liquid Crystal Display (LCD) and a Touch Panel (TP). If the screen includes the touch panel, the screen may be implemented as a touch screen to receive input signals from the user. The touch panel includes at least one touch sensor to sense touches, swipes, and gestures on the touch panel. The touch sensor may not only sense a boundary of a touch or swipe action, but also sense a period of wakeup time and a pressure associated with the touch or swipe action. In some embodiments, the multimedia component 1708 includes a front-facing camera and/or a rear-facing camera. When the UE 1700 is in an operating mode, such as a shooting mode or a video mode, the front-facing camera and/or the rear-facing camera can receive external multimedia data. Each front-facing camera and rear-facing camera may be a fixed optical lens system or has focal length and optical zoom capability.

The audio component 1710 is configured to output and/or input audio signals. For example, the audio component 1710 includes a microphone (MIC) configured to receive an external audio signal when the UE 1700 is in an operation mode, such as a call mode, a recording mode, and a voice recognition mode. The received audio signal may be further stored in the memory 1704 or transmitted via the communication component 1716. In some embodiments, the audio component 1710 further includes a speaker to output audio signals.

The I/O interface 1712 provides an interface between the processing component 1702 and peripheral interface modules, such as a keyboard, a click wheel, buttons, and the like. The buttons may include, but are not limited to, a home button, a volume button, a starting button, and a locking button.

The sensor component 1714 includes at least one sensor to provide status assessments of various aspects of the UE 1700. For instance, the sensor component 1714 may detect an open/closed status of the UE 1700, relative positioning of components, e.g., the display and the keypad, of the UE 1700, a change in position of the UE 1700 or a component of the UE 1700, a presence or absence of user contact with the UE 1700, an orientation or an acceleration/deceleration of the UE 1700, and a change in temperature of the UE 1700. The sensor component 1714 may include a proximity sensor configured to detect the presence of nearby objects without any physical contact. The sensor component 1714 may also include a light sensor, such as a Complementary Metal Oxide Semiconductor (CMOS) or Charge-Coupled Device (CCD) image sensor, for use in imaging applications. In some embodiments, the sensor component 1714 may also include an accelerometer sensor, a gyroscope sensor, a magnetic sensor, a pressure sensor, or a temperature sensor.

The communication component 1716 is configured to facilitate communication, wired or wirelessly, between the UE 1700 and other devices. The UE 1700 can access a wireless network based on a communication standard, such as Wi-Fi, 2G or 3G, or a combination thereof. In an exemplary embodiment, the communication component 1716 receives a broadcast signal or broadcast associated information from an external broadcast management system via a broadcast channel. In an exemplary embodiment, the communication component 1716 further includes a Near Field Communication (NFC) module to facilitate short-range communication. For example, the NFC module may be implemented based on a RF Identification (RFID) technology, an Infrared Data Association (IrDA) technology, an Ultra-Wide Band (UWB) technology, a Blue Tooth (BT) technology, and other technologies.

In some exemplary embodiments, the UE 1700 may be implemented with at least one Application Specific Integrated Circuit (ASIC), Digital Signal Processor (DSP), Digital Signal Processing Device (DSPD), Programmable Logic Device (PLD), Field Programmable Gate Array (FPGA), controller, micro-controller, microprocessor or other electronic components, for performing the method described above.

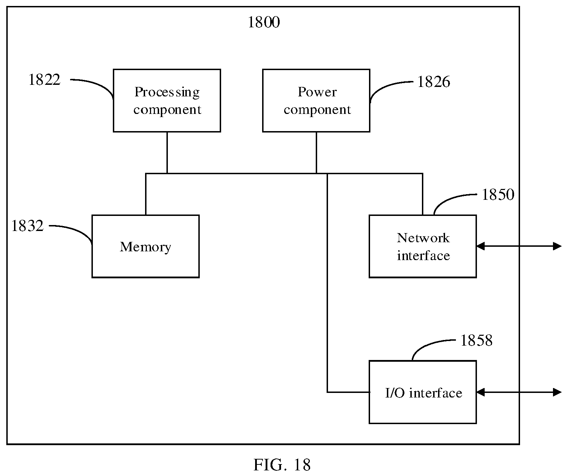

FIG. 18 is a block diagram of a network-side device 1800 provided by an embodiment of the disclosure. For example, the network-side device 1800 may be provided as a network-side device. As illustrated in FIG. 18, the network-side device 1800 includes a processing component 1822, which further includes at least one processor, and memory resources represented by a memory 1832 for storing instructions that can be executed by the processing component 1822, such as application programs. The application programs stored in the memory 1832 may include one or more modules each corresponding to a set of instructions. In addition, the processing component 1822 is configured to execute instructions to perform any method applied to the network-side device as described in the foregoing method embodiments, e.g., the method shown in FIG. 1.

The network-side device 1800 may also include a power component 1826 configured to perform power management of the network-side device 1800, a wired or wireless network interface 1850 configured to connect the network-side device 1800 to a network, and an I/O interface 1858. The network-side device 1800 may operate based on an operating system stored in the memory 1832, such as Windows Server TM, Mac OS XTM, Unix TM, Linux TM, Free BSDTM or the like.

In the above embodiments of the disclosure, the methods provided in the embodiments of the disclosure are described from the perspectives of the network-side device and the UE, respectively. In order to realize each of the functions in the methods provided by the above embodiments of the disclosure, the network-side device and the UE may include a hardware structure, a software module, and realize each of the above functions in the form of the hardware structure, the software module, or a combination of the hardware structure and the software module. A certain function of the above functions may be performed in the form of a hardware structure, a software module, or a combination of the hardware structure and the software module.

In the above embodiments of the disclosure, the methods provided in the embodiments of the disclosure are described from the perspectives of the network-side device and the UE, respectively. In order to realize each of the functions in the methods provided by the above embodiments of the disclosure, the network-side device and the UE may include a hardware structure, a software module, and realize each of the above functions in the form of the hardware structure, the software module, or a combination of the hardware structure and the software module. A certain function of the above functions may be performed in the form of a hardware structure, a software module, or a combination of the hardware structure and the software module.

An embodiment of the disclosure provides a communication apparatus. The communication apparatus may include a transceiver module and a processing module. The transceiver module may include a sending module and/or a receiving module. The sending module is used for realizing a sending function, and the receiving module is used for realizing a receiving function. The transceiver module may realize the sending function and/or the receiving function.

The communication apparatus may be a terminal (e.g., the terminal in the preceding method embodiments), a device in the terminal, or a device capable of being used together with the terminal. Alternatively, the communication apparatus may be a network device, or a device in the network device, or a device capable of being used together with the network device.

An embodiment of the disclosure provides another communication apparatus. The communication apparatus may be a network device, a terminal (e.g., the terminal in the preceding method embodiments), or a chip, a chip system or a processor that supports the network device to realize the above-described methods, or a chip, a chip system or a processor that supports the terminal to realize the above-described methods. The device may be used to realize the methods described in the above method embodiments with reference to the description of the above-described method embodiments.

The communication apparatus may include one or more processors. The processor may be a general purpose processor or a dedicated processor, such as, a baseband processor or a central processor. The baseband processor is used for processing communication protocols and communication data. The central processor is used for controlling the communication apparatus (e.g., network-side device, baseband chip, terminal, terminal chip, a central unit (CU) or a distributed unit (DU)), executing computer programs, and processing data of the computer programs.

Optionally, the communication apparatus may include one or more memories on which computer programs may be stored. The processor executes the computer programs to cause the communication apparatus to perform the methods described in the above method embodiments. Optionally, data may also be stored in the memory. The communication apparatus and the memory may be provided separately or may be integrated together.

Optionally, the communication apparatus may also include a transceiver and an antenna. The transceiver may be referred to as transceiver unit, transceiver machine, or transceiver circuit, for realizing the transceiver function. The transceiver may include a receiver and a transmitter. The receiver may be referred to as receiver machine or receiving circuit, for realizing the receiving function. The transmitter may be referred to as transmitter machine or transmitting circuit, for realizing the transmitting function.

Optionally, the communication apparatus may also include one or more interface circuits. The interface circuits are used to receive code instructions and transmit them to the processor. The processor runs the code instructions to cause the communication apparatus to perform the method described in the method embodiments.

If the communication apparatus is a network-side device, the processor is used to perform the method shown in any one of FIGS. 1-7.

If the communication apparatus is a terminal (e.g., the terminal in the preceding method embodiments), the processor is used to perform the method shown in any one of FIGS. 8 -14.

In an implementation, the processor may include a transceiver for implementing the receiving and transmitting functions. The transceiver may be, for example, a transceiver circuit, an interface, or an interface circuit. The transceiver circuit, interface, or interface circuit for implementing the receiving and transmitting functions may be separated or may be integrated together. The transceiver circuit, interface, or interface circuit described above may be used for code/data reading and writing, or may be used for signal transmission or delivery.

In an implementation, the processor may store computer programs. The processor runs the computer programs to cause the communication apparatus to perform the methods described in the method embodiments above. The computer programs may be solidified in the processor, in which case the processor may be implemented by hardware.

In an implementation, the communication apparatus may include circuits. The circuits may implement the sending, receiving or communicating function in the preceding method embodiments. The processor and transceiver described in this disclosure may be implemented on integrated circuits (ICs), analog ICs, radio frequency integrated circuits (RFICs), mixed signal ICs, application specific integrated circuits (ASICs), printed circuit boards (PCBs), and electronic devices. The processor and transceiver may also be produced using various IC process technologies, such as complementary metal oxide semiconductor (CMOS), nMetal-oxide-semiconductor (NMOS), positive channel metal oxide semiconductor (PMOS), bipolar junction transistor (BJT), bipolar CMOS (BiCMOS), silicon-germanium (SiGe), gallium arsenide (GaAs) and so on.

The communication apparatus in the above description of embodiments may be a network device or a terminal (e.g., the terminal in the above method embodiments), but the scope of the communication apparatus described in the disclosure is not limited thereto, and the structure of the communication apparatus may not be limited by figures. The communication apparatus may be a stand-alone device or may be part of a larger device. For example, the described communication apparatus may be:
(1) a stand-alone IC, chip, chip system or subsystem;
(2) a collection of ICs including one or more ICs, optionally, the collection of ICs may also include storage components for storing data and computer programs;
(3) an ASIC, such as a modem;
(4) modules that may be embedded within other devices;
(5) receivers, terminals, smart terminals, cellular phones, wireless devices, handheld machines, mobile units, in-vehicle devices, network devices, cloud devices, artificial intelligence devices, and the like; and
(6) others.

If the communication apparatus is a chip or a chip system, the chip includes a processor and an interface. There may be one or more processors, and there may be multiple interfaces.

Optionally, the chip further includes a memory used for storing necessary computer programs and data.

It is understandable by those skilled in the art that various illustrative logical blocks and steps listed in the embodiments of the disclosure may be implemented by electronic hardware, computer software, or a combination of both. Whether such function is implemented by hardware or software depends on the particular application and the design requirements of the entire system. Those skilled in the art may, for each particular application, use various methods to implement the described function, but such implementation should not be construed as being beyond the scope of protection of the embodiments of the disclosure.

The disclosure also provides a readable storage medium having instructions stored thereon. When the instructions are executed by a computer, the function of any of the method embodiments described above is implemented.

The disclosure also provides a computer program product. When the computer program product is executed by a computer, the function of any of the method embodiments described above is implemented.

The above embodiments may be implemented in whole or in part by software, hardware, firmware, or any combination thereof. When implemented using software, it may be implemented, in whole or in part, in the form of a computer program product. The computer program product includes one or more computer programs. When loading and executing the computer program on the computer, all or part of processes or functions described in the embodiments of the disclosure are implemented. The computer may be a general-purpose computer, a dedicated computer, a computer network, or other programmable devices. The computer program may be stored in a computer-readable storage medium or transmitted from one computer-readable storage medium to another computer-readable storage medium. For example, the computer program may be transmitted from one web site, computer, server, or data center to another web site, computer, server, or data center, in a wired manner (e.g., by using coaxial cables, fiber optics, or digital subscriber lines (DSLs) or wirelessly (e.g., by using infrared wave, wireless wave, or microwave). The computer-readable storage medium may be any usable medium to which the computer has access or a data storage device such as a server and a data center integrated by one or more usable mediums. The usable medium may be a magnetic medium (e.g., floppy disk, hard disk, and tape), an optical medium (e.g., a high-density digital video disc (DVD)), or a semiconductor medium (e.g., a solid state disk (SSD)).

Those skilled in the art understand that "first", "second", and other various numerical numbers involved in the disclosure are only described for the convenience of differentiation, and are not used to limit the scope of the embodiments of the disclosure, or indicate the order of precedence.

The term "at least one" in the disclosure may also be described as one or more, and the term "multiple" may be two, three, four, or more, which is not limited in the disclosure. In the embodiments of the disclosure, for a type of technical features, "first", "second", and "third", and "A", "B", "C" and "D" are used to distinguish different technical features of the type, the technical features described using the "first", "second", and "third", and "A", "B", "C" and "D" do not indicate any order of precedence or magnitude.

Other embodiments of the disclosure will be apparent to those skilled in the art from consideration of the specification and practice of the disclosure disclosed here. This application is intended to cover any variations, uses, or adaptations of the disclosure following the general principles thereof and including such departures from the disclosure as come within known or customary practice in the art. It is intended that the specification and examples be considered as illustrative only, with a true scope and spirit of the disclosure being indicated by the following claims.

It will be appreciated that the disclosure is not limited to the exact construction that has been described above and illustrated in the accompanying drawings, and that various modifications and changes can be made without departing from the scope thereof. It is intended that the scope of the disclosure only be limited by the attached claims.

## Claims

1. A physical downlink shared channel (PDSCH) transmission method, performed by a network-side device, comprising:
in response to a transmission occasion of a broadcast PDSCH, determining whether to send a unicast PDSCH to a terminal on the transmission occasion and/or determining resources allocated to and occupied by a unicast PDSCH of a terminal.

2. The method of claim 1, wherein determining whether to send the unicast PDSCH to the terminal on the transmission occasion and/or determining the resources allocated to and occupied by the unicast PDSCH of the terminal comprises:
in response to frequency resources occupied by the broadcast PDSCH and the unicast PDSCH not exceeding a processing capacity of the terminal, sending the unicast PDSCH;
or,
in response to sending the broadcast PDSCH and the unicast PDSCH simultaneously, determining that resources within a processing capacity of the terminal are allocated to the broadcast PDSCH and the unicast PDSCH of the terminal.

3. The method of claim 1, wherein determining whether to send the unicast PDSCH to the terminal on the transmission occasion and/or determining the resources allocated to and occupied by the unicast PDSCH of the terminal comprises:
in response to frequency resources occupied by the broadcast PDSCH and the unicast PDSCH exceeding a processing capacity of the terminal but not exceeding a first preset threshold, sending the unicast PDSCH;
or,
in response to sending the broadcast PDSCH and the unicast PDSCH simultaneously, determining that resources not exceeding a first preset threshold are allocated to and occupied by the broadcast PDSCH and the unicast PDSCH, wherein the first preset threshold is no less than the processing capacity of the terminal.

4. The method of claim 1, wherein determining whether to send the unicast PDSCH to the terminal on the transmission occasion and/or determining the resources allocated to and occupied by the unicast PDSCH of the terminal comprises:
in response to frequency resources occupied by the broadcast PDSCH and the unicast PDSCH exceeding a first preset threshold, withholding from sending the unicast PDSCH.

5. The method of any one of claims 2-4, wherein the frequency resources occupied by the broadcast PDSCH and the unicast PDSCH comprise at least one of:
a number of physical resource blocks (PRBs) occupied by the broadcast PDSCH and the unicast PDSCH; or
a difference value between a lowest frequency point and a highest frequency point in the broadcast PDSCH and the unicast PDSCH.

6. The method of claim 1, wherein determining whether to send the unicast PDSCH to the terminal on the transmission occasion and/or determining the resources allocated to and occupied by the unicast PDSCH of the terminal comprises:
according to a preset priority, determining whether to send the unicast PDSCH to the terminal on the transmission occasion and/or determining the resources allocated to and occupied by the unicast PDSCH of the terminal.

7. The method of claim 6, wherein according to the preset priority, determining whether to send the unicast PDSCH to the terminal on the transmission occasion and/or determining the resources allocated to and occupied by the unicast PDSCH of the terminal comprises:
in response to a priority of the unicast PDSCH being higher than a priority of the broadcast PDSCH, sending the unicast PDSCH to the terminal and/or determining that the resources not exceeding a second preset threshold are allocated to and occupied by the unicast PDSCH of the terminal, wherein the second preset threshold is no less than a processing capacity of the terminal.

8. The method of claim 6, wherein according to the preset priority, determining whether to send the unicast PDSCH to the terminal on the transmission occasion and/or determining the resources allocated to and occupied by the unicast PDSCH of the terminal comprises:
in response to a priority of the unicast PDSCH being lower than a priority of the broadcast PDSCH, withholding from sending the unicast PDSCH to the terminal;
or,
in response to a priority of the unicast PDSCH being lower than a priority of the broadcast PDSCH, determining that resources not exceeding a third preset threshold are allocated to and occupied by the broadcast PDSCH and the unicast PDSCH of the terminal, wherein the third preset threshold is no less than a processing capacity of the terminal.

9. A physical downlink shared channel (PDSCH) transmission method, performed by a terminal, comprising:
in response to a receiving occasion of a broadcast PDSCH, determining a receiving behavior of the broadcast PDSCH and/or a unicast PDSCH.

10. The method of claim 9, wherein determining the receiving behavior of the broadcast PDSCH and/or the unicast PDSCH comprises:
in response to frequency resources occupied by the broadcast PDSCH and the unicast PDSCH not exceeding a processing capacity of the terminal, receiving the unicast PDSCH sent by a network-side device.

11. The method of claim 9, wherein determining the receiving behavior of the broadcast PDSCH and/or the unicast PDSCH comprises:
in response to frequency resources occupied by the broadcast PDSCH and the unicast PDSCH exceeding a processing capacity of the terminal but not exceeding a first preset threshold, determining to receive at least part of the broadcast PDSCH and the unicast PDSCH, wherein the first preset threshold is no less than the processing capacity of the terminal.

12. The method of claim 11, further comprising:
withholding from receiving any PDSCH that exceeds the processing capacity of the terminal.

13. The method of claim 12, wherein the PDSCH that exceeds the processing capacity of the terminal comes from the same type of PDSCH.

14. The method of claim 12, wherein there are a plurality of PDSCHs that exceed the processing capacity of the terminal, and the PDSCHs that exceed the processing capacity of the terminal at least come from two types of PDSCHs.

15. The method of claim 9, further comprising:
in response to configuration information sent by a network-side device, determining a preset threshold.

16. The method of claim 9, wherein determining the receiving behavior of the broadcast PDSCH and/or the unicast PDSCH comprises:
determining, according to a preset priority, the receiving behavior of the broadcast PDSCH and/or the unicast PDSCH.

17. The method of claim 16, wherein determining, according to the preset priority, the receiving behavior of the broadcast PDSCH and/or the unicast PDSCH comprises:
in response to a priority of the unicast PDSCH being higher than a priority of the broadcast PDSCH, receiving the unicast PDSCH sent by a network-side device, wherein resources occupied by the unicast PDSCH are less than a processing capacity of the terminal.

18. The method of claim 17, further comprising:
withholding from receiving the broadcast PDSCH;
or,
receiving part of the broadcast PDSCH.

19. The method of claim 16, wherein determining, according to the preset priority, the receiving behavior of the broadcast PDSCH and/or the unicast PDSCH comprises:
in response to a priority of the unicast PDSCH being lower than a priority of the broadcast PDSCH, receiving the unicast PDSCH sent by a network-side device, wherein resources occupied by the broadcast PDSCH and the unicast PDSCH do not exceed a processing capacity of the terminal.

20. A physical downlink shared channel (PDSCH) transmission apparatus, configured on a network-side, comprising:
a sending module, configured to, in response to a transmission occasion of a broadcast PDSCH, determine whether to send a unicast PDSCH to a terminal on the transmission occasion and/or determine resources allocated to and occupied by a unicast PDSCH of a terminal.

21. A physical downlink shared channel (PDSCH) transmission apparatus, configured on a terminal side, comprising:
a receiving module, configured to, in response to a receiving occasion of a broadcast PDSCH, determine a receiving behavior of the broadcast PDSCH and/or a unicast PDSCH.

22. A network-side device, comprising a processor and a memory having computer programs stored therein, wherein when the processor executes the computer programs stored in the memory, the device is caused to implement the method according to any one of claims 1-8.

23. A terminal, comprising a processor and a memory having computer programs stored therein, wherein when the processor executes the computer programs stored in the memory, the terminal is caused to implement the method according to any one of claims 9-19.

24. A communication apparatus, comprising a processor and an interface circuit,
wherein the interface circuit is configured to receive code instructions and transmit the code instructions to the processor; and
the processor is configured to run the code instructions to implement the method according to any one of claims 1-8.

25. A communication apparatus, comprising a processor and an interface circuit,
wherein the interface circuit is configured to receive code instructions and transmit the code instructions to the processor; and
the processor is configured to run the code instructions to implement the method according to any one of claims 9-19.

26. A computer-readable storage medium for storing instructions, wherein when the instructions are executed, the method according to claims 1-8 is implemented.

27. A computer-readable storage medium for storing instructions, wherein when the instructions are executed, the method according to claims 9-19 is implemented.
